# FASCICULE DE BREVET EUROPEEN

(11) **EP 3 672 209 B1**
(45) Date de publication et mention de la délivrance du brevet: **15.09.2021**
(21) Numéro de dépôt: 19217295.5
(22) Date de dépôt: 18.12.2019
(51) Int. Cl.: H04L 29/12, H04L 12/751, H04L 12/753

(54) **PROCÉDÉ D'IDENTIFICATION DE NOEUD DE COMMUNICATION**
IDENTIFIZIERUNGSVERFAHREN VON KOMMUNIKATIONSKNOTEN
METHOD FOR IDENTIFYING A COMMUNICATION NODE

(30) Priorité: 20.12.2018 FR 1873578
(43) Date de publication de la demande: 24.06.2020
(73) Titulaire: SAGEMCOM BROADBAND SAS, 92500 Rueil-Malmaison (FR)
(72) Inventeur: COLLIAUX, Mathieu, 92500 Rueil Malmaison (FR)
(74) Mandataire: Cabinet Le Guen Maillet

(56) Documents cités:
- US-A1- 2006 209 852
- US-B1- 8 427 969
- WANG YOU-CHIUN ET AL: "A Low-cost, High-Efficiency SDN Framework to Diminish Redundant ARP and IGMP Traffics in Large-Scale LANs", 2017 IEEE 41ST ANNUAL COMPUTER SOFTWARE AND APPLICATIONS CONFERENCE (COMPSAC), IEEE, vol. 1, 23 juillet 2018 (2018-07-23), pages 894-903, XP033409632, ISSN: 0730-3157, DOI: 10.1109/COMPSAC.2018.00155 ISBN: 978-1-5386-2667-2 [extrait le 2018-06-08]

## Description

### DOMAINE TECHNIQUE

La présente invention concerne un procédé d'identification d'un nœud de communication, dans un système d'extension de couverture de communication sans-fil, auquel est connecté un dispositif particulier.

### ETAT DE LA TECHNIQUE ANTERIEURE

Dans les réseaux locaux LAN (« Local Area Network » en anglais), des systèmes d'extension de couverture de communication sans-fil peuvent être utilisés afin d'augmenter la portée de ces réseaux locaux LAN en coordonnant plusieurs points d'accès AP (« Access Point » en anglais) répartis. Ces différents points d'accès AP sont intégrés à des nœuds de communication, appelés simplement ci-après *nœuds,* interconnectés grâce à un sous-réseau d'acheminement (« backhaul subnetwork » en anglais) et mettent tous à disposition un même réseau local sans-fil WLAN (« Wireless Local Area Network » en anglais). Dans le cadre de la technologie Wi-Fi (marque déposée), tous ces points d'accès AP utilisent ainsi un même identifiant SSID (« Service Set IDentifier » en anglais) et un même mot de passe (aussi appelé *clef de sécurité*)*.* Ainsi, l'extension de couverture de communication sans-fil est transparente pour les dispositifs connectés au réseau local sans-fil WLAN.

Le système d'extension de couverture de communication sans-fil est ainsi typiquement relié à l'Internet au travers d'une passerelle GW d'accès à l'Internet, par exemple grâce à un cordon Ethernet assurant le raccordement d'un nœud principal du système d'extension de couverture de communication sans-fil avec la passerelle GW. Le système d'extension de couverture de communication sans-fil sert alors de relais entre la passerelle et chaque dispositif connecté de manière filaire ou sans-fil au réseau local LAN, et sert aussi de relais entre ces différents dispositifs connectés au réseau local LAN pour leur permettre de communiquer entre eux.

Les nœuds du sous-réseau d'acheminement sont connectés les uns aux autres par une structure en forme d'arbre, un nœud pouvant alors servir de relais entre deux autres nœuds du sous-réseau d'acheminement. Les nœuds sont ainsi interconnectés grâce à des liaisons filaires, par exemple de type Ethernet, ou à des liaisons sans-fil, par exemple une liaison Wi-Fi (marque déposée) utilisant un identifiant SSID différent dudit réseau local WLAN lui-même. Les nœuds du sous-réseau d'acheminement communiquent ainsi entre eux grâce à des liaisons logiques, par exemple des communications IP ou des tunnels chiffrés ou des communications selon un protocole de communication propriétaire. L'établissement de ces liaisons logiques s'effectue typiquement grâce à des messages de sonde (« probe » en anglais) et de découverte (« discovery » en anglais).

Les nœuds du sous-réseau d'acheminement sont typiquement coordonnés de manière centralisée, par un nœud maître parmi lesdits nœuds du sous-réseau d'acheminement. Le nœud maître peut être désigné par configuration figée ou dynamiquement par élection. Tous les nœuds du sous-réseau d'acheminement ont ainsi connaissance du nœud maître, et sont capables de l'identifier grâce à son adresse MAC (« Medium Access Control » en anglais).

Dans le cas des réseaux locaux LAN chez les abonnés d'un fournisseur d'accès à l'Internet, le nœud maître est préférentiellement le nœud du sous-réseau d'acheminement qui est au plus près de la passerelle GW d'accès à l'Internet. Cela permet d'y activer spécifiquement des fonctionnalités, comme par exemple des fonctionnalités de contrôle parental, puisque le nœud maître a alors une position stratégique de concentration de flux de données en étant le nœud du système d'extension de couverture de communication sans-fil au plus près de la passerelle GW d'accès à l'Internet. Il est alors souhaitable de repérer, dans la topologie du sous-réseau d'acheminement, quel est ce nœud qui est au plus près ladite passerelle GW.

D'autres situations dans lesquelles il est intéressant de repérer, dans la topologie du sous-réseau d'acheminement, quel nœud est au plus près d'un dispositif en particulier. Par exemple, il est intéressant de déterminer quel nœud est au plus près d'un téléviseur ou à une source multimédia, pour y activer un module centralisé de contrôle dudit téléviseur ou respectivement de ladite source multimédia, destiné à retranscrire, dans un langage compréhensible du téléviseur ou respectivement de la source multimédia, des commandes reçues dans divers formats en provenance d'organes de contrôle variés connectés au réseau local LAN. Il est aussi intéressant de connaître, dans la topologie du sous-réseau d'acheminement, quel nœud est au plus près d'un dispositif en particulier, pour fournir une aide au diagnostic en cas de dysfonctionnement de ce dispositif.

Le brevet US 8427969B1 divulgue un système et un procédé de calcul de la proximité d'hôte passif dans une couche de liaison L2.

Il est alors souhaitable de pallier ces inconvénients de l'état de la technique.

### EXPOSE DE L'INVENTION

La présente invention est définie par les revendications 1 à 14. Un objet de la présente invention est de proposer un procédé d'identification d'un nœud au plus près d'un dispositif cible dans un système d'extension de couverture de communication sans-fil comportant un sous-réseau d'acheminement en forme d'arbre comportant un ensemble de nœuds interconnectés, une pluralité de nœuds du sous-réseau d'acheminement implémentant une fonctionnalité de point d'accès d'un même réseau de communication sans-fil, le système d'extension de couverture de communication sans-fil étant adapté pour permettre de connecter des dispositifs auxdits nœuds par le biais du réseau de communication sans-fil ou de manière filaire afin de former un réseau local. Le procédé comporte les étapes suivantes : surveiller des messages échangés lors d'une phase de résolution d'adresses, et en obtenir une association entre adresse réseau et adresse MAC de chaque dispositif connecté au réseau local et nœud du sous-réseau d'acheminement ; remplir, dans chaque dit nœud, une table de résolution d'adresses en y indiquant chaque association entre adresse réseau et adresse MAC obtenue par ledit nœud, ainsi qu'une information d'interface représentant une interface dudit nœud via laquelle le message ayant permis d'obtenir ladite association a été reçu. Et pour identifier le nœud au plus près du dispositif cible parmi lesdits nœuds du sous-réseau d'acheminement, le procédé comporte une analyse des tables de résolution incluant les étapes suivantes : parcourir les tables de résolution d'adresses en recherchant l'association entre adresse réseau et adresse MAC correspondant audit dispositif cible, et en obtenir l'information d'interface associée ; et identifier le nœud au plus près du dispositif cible comme étant le nœud dont la table de résolution d'adresses ne référence aucun nœud du sous-réseau d'acheminement en association avec ladite information d'interface. Ainsi, le nœud au plus près du dispositif cible parmi lesdits nœuds du sous-réseau d'acheminement est aisément identifié.

Selon un mode de réalisation particulier, chaque nœud du sous-réseau d'acheminement parcourt sa propre table de résolution et transmet un message indiquant si ledit nœud en question est au plus près du dispositif cible parmi les nœuds du sous-réseau d'acheminement.

Selon un mode de réalisation particulier, chaque nœud du sous-réseau d'acheminement parcourt sa propre table de résolution et transmet un message incluant un score d'analyse représentatif de la distance topologique, au sein du sous-réseau d'acheminement, qui le sépare du dispositif cible.

Selon un mode de réalisation particulier, chaque nœud du sous-réseau d'acheminement effectue l'analyse pour un ou plusieurs dispositifs cible prédéterminés, à chaque changement apporté à sa table de résolution d'adresses.

Selon un mode de réalisation particulier, l'analyse des tables ARP est effectuée en excluant les entrées des tables de résolution d'adresses qui correspondent à des interfaces sur lesquelles il est prédéterminé que le dispositif cible n'est pas connecté.

Selon un mode de réalisation particulier, le dispositif cible est une passerelle d'accès à l'Internet, qui a été identifiée grâce à un champ dédié d'un bail fourni à un nœud du sous-réseau d'acheminement par un serveur DHCP.

Il est également proposé un procédé d'activation de fonctionnalité dans un système d'extension de couverture de communication sans-fil comportant un sous-réseau d'acheminement en forme d'arbre comportant un ensemble de nœuds interconnectés, le procédé d'activation de fonctionnalité incluant une identification d'un nœud au plus près d'un dispositif cible parmi lesdits nœuds du sous-réseau d'acheminement telle que précédemment évoquée et en outre une activation de ladite fonctionnalité spécifiquement dans le nœud identifié comme étant au plus près du dispositif cible.

Selon un mode de réalisation particulier, le dispositif cible est une passerelle d'accès à l'Internet et la fonctionnalité est une fonctionnalité de nœud maître coordonnant le sous-réseau d'acheminement.

Selon un mode de réalisation particulier, le procédé d'activation de la fonctionnalité comporte en outre une activation de fonctionnalités complémentaires dans le nœud identifié comme étant au plus près de la passerelle d'accès à l'Internet, les fonctionnalités complémentaires étant des fonctionnalités de pare-feu vis-à-vis de flux de données échangés via l'Internet au travers de la passerelle d'accès à l'Internet et/ou des fonctionnalités de contrôle parental vis-à-vis de flux de données échangés via l'Internet au travers de la passerelle d'accès à l'Internet.

Il est également proposé un système d'extension de couverture de communication sans-fil comportant un sous-réseau d'acheminement en forme d'arbre comportant un ensemble de nœuds interconnectés, une pluralité de nœuds du sous-réseau d'acheminement implémentant une fonctionnalité de point d'accès d'un même réseau de communication sans-fil, le système d'extension de couverture de communication sans-fil étant adapté pour permettre de connecter des dispositifs auxdits nœuds par le biais du réseau de communication sans-fil ou de manière filaire afin de former un réseau local. Le système comporte : des moyens pour surveiller des messages échangés lors d'une phase de résolution d'adresses, et en obtenir une association entre adresse réseau et adresse MAC de chaque dispositif connecté au réseau local et nœud du sous-réseau d'acheminement ; des moyens pour remplir, dans chaque dit nœud, une table de résolution d'adresses en y indiquant chaque association entre adresse réseau et adresse MAC obtenue par ledit nœud, ainsi qu'une information d'interface représentant une interface dudit nœud via laquelle le message ayant permis d'obtenir ladite association a été reçu. Et pour identifier un nœud au plus près du dispositif cible parmi lesdits nœuds du sous-réseau d'acheminement, le système comporte des moyens pour analyser les tables de résolution incluant : des moyens pour parcourir les tables de résolution d'adresses en recherchant l'association entre adresse réseau et adresse MAC correspondant audit dispositif cible, et en obtenir l'information d'interface associée ; et des moyens pour identifier le nœud au plus près du dispositif cible comme étant le nœud dont la table de résolution d'adresses ne référence aucun nœud du sous-réseau d'acheminement en association avec ladite information d'interface.

Selon un mode de réalisation particulier, le système comporte en outre des moyens pour activer une fonctionnalité spécifiquement dans le nœud identifié comme étant au plus près du dispositif cible.

Selon un mode de réalisation particulier, le dispositif cible est une passerelle d'accès à l'Internet et la fonctionnalité est une fonctionnalité de nœud maître coordonnant le sous-réseau d'acheminement.

Selon un mode de réalisation particulier, le système comporte en outre des moyens pour activer des fonctionnalités complémentaires spécifiquement dans le nœud identifié comme étant au plus près de la passerelle d'accès à l'Internet, les fonctionnalités complémentaires étant des fonctionnalités de pare-feu vis-à-vis de flux de données échangés via l'Internet au travers de la passerelle d'accès à l'Internet et/ou des fonctionnalités de contrôle parental vis-à-vis de flux de données échangés via l'Internet au travers de la passerelle d'accès à l'Internet.

Il est également proposé un nœud, appelé nœud considéré, destiné à être utilisé dans un système d'extension de couverture de communication sans-fil comportant un sous-réseau d'acheminement en forme d'arbre comportant un ensemble de nœuds interconnectés dont le nœud considéré, une pluralité de nœuds du sous-réseau d'acheminement implémentant une fonctionnalité de point d'accès d'un même réseau de communication sans-fil, le système d'extension de couverture de communication sans-fil étant adapté pour permettre de connecter des dispositifs auxdits nœuds par le biais du réseau de communication sans-fil ou de manière filaire afin de former un réseau local. Le nœud considéré comporte : des moyens pour surveiller des messages échangés lors d'une phase de résolution d'adresses, et en obtenir une association entre adresse réseau et adresse MAC de chaque dispositif connecté au réseau local et nœud du sous-réseau d'acheminement ; des moyens pour remplir une table de résolution d'adresses en y indiquant chaque association entre adresse réseau et adresse MAC obtenue par le nœud considéré, ainsi qu'une information d'interface représentant une interface du nœud considéré via laquelle le message ayant permis d'obtenir ladite association a été reçu. Et pour identifier si le nœud considéré est au plus près du dispositif cible parmi lesdits nœuds du sous-réseau d'acheminement, le nœud considéré comporte des moyens pour analyser sa table de résolution incluant : des moyens pour parcourir la table de résolution d'adresses en recherchant l'association entre adresse réseau et adresse MAC correspondant audit dispositif cible, et en obtenir l'information d'interface associée ; des moyens pour identifier le nœud considéré comme étant au plus près du dispositif cible lorsque la table de résolution d'adresses ne référence aucun nœud du sous-réseau d'acheminement en association avec ladite information d'interface, et pour identifier le nœud considéré comme n'étant pas au plus près du dispositif cible sinon ; et des moyens pour informer, via le sous-réseau d'acheminement, que le nœud considéré est ou pas le nœud au plus près du dispositif cible parmi lesdits nœuds du sous-réseau d'acheminement.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement un système de communication dans lequel la présente invention peut être implémentée ;
[Fig. 2] illustre schématiquement un exemple d'agencement matériel de nœuds d'un sous-réseau d'acheminement du système de communication ;
[Fig. 3] illustre schématiquement un algorithme de mise à jour de table de résolution d'adresses ;
[Fig. 4] illustre schématiquement un algorithme d'analyse de table de résolution d'adresses ;
[Fig. 5] illustre schématiquement un algorithme d'identification de nœud au plus proche d'un dispositif en particulier ;
[Fig. 6] illustre schématiquement un algorithme d'activation de fonctionnalité spécifiquement dans un nœud identifié au plus proche d'un dispositif en particulier ; et
[Fig. 7] illustre schématiquement un algorithme d'élection de nœud maître du sous-réseau d'acheminement.

### EXPOSE DETAILLE DE MODES DE REALISATION

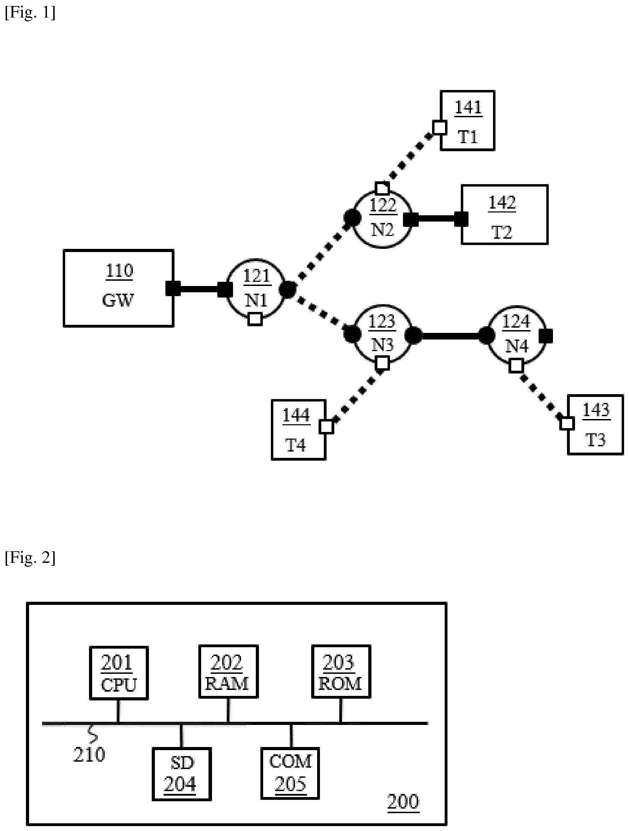

La **Fig. 1** illustre schématiquement un système de communication dans lequel la présente invention peut être implémentée. Le système de communication comporte un système d'extension de couverture de communication sans-fil construit autour d'un sous-réseau d'acheminement comportant un ensemble de nœuds N1 121, N2 122, N3 123, N4 124 interconnectés. Chaque nœud d'une pluralité de nœuds du sous-réseau d'acheminement, typiquement tous les nœuds du sous-réseau d'acheminement, implémente une fonctionnalité de point d'accès AP d'un réseau local sans-fil WLAN (« Wireless Local Area Network » en anglais). Les nœuds de ladite pluralité de nœuds mettent tous à disposition un même réseau local sans-fil WLAN (même nom...). Dans le cadre de la technologie Wi-Fi (marque déposée), tous ces points d'accès AP utilise ainsi un même identifiant SSID et un même mot de passe. La zone de couverture du réseau local sans-fil WLAN, et donc manière générale du réseau local LAN ainsi constitué autour du système d'extension de couverture de communication sans-fil, est alors étendue de manière transparente pour chaque terminal, ou station, qui s'y connecte.

Les nœuds N1 121, N2 122, N3 123, N4 124 du sous-réseau d'acheminement sont connectés les uns aux autres grâce à une structure en forme d'arbre, un nœud pouvant alors servir de relais entre deux autres nœuds du sous-réseau d'acheminement. Les nœuds N1 121, N2 122, N3 123, N4 124 sont ainsi interconnectés grâce à des liaisons filaires, par exemple de type Ethernet, ou à des liaisons sans-fil, par exemple une liaison Wi-Fi (marque déposée) utilisant un identifiant SSID différent dudit réseau local sans-fil WLAN lui-même. Les nœuds N1 121, N2 122, N3 123, N4 124 du sous-réseau d'acheminement communiquent ainsi entre eux grâce à des liaisons logiques, par exemple des communications IP ou des tunnels chiffrés ou des communications selon un protocole de communication propriétaire. Cependant, lorsqu'une interface filaire est utilisée pour le sous-réseau d'acheminement, cette interface filaire ne peut pas être utilisée à un autre dessein, notamment pas pour y connecter un terminal.

De manière illustrative, la Fig. 1 montre que le nœud N1 121 est connecté au nœud N2 122 et au nœud N3 123 grâce à une liaison sans-fil (distincte du réseau local sans-fil WLAN lui-même), et le nœud N4 124 est connecté au nœud N3 123 grâce à une liaison filaire.

Le système d'extension de couverture de communication sans-fil permet ainsi d'interconnecter une passerelle GW 110 d'accès à l'Internet, un terminal T1 141, un terminal T2 142, un terminal T3 143 et un terminal T4 144. Le terminal T1 141 est par exemple un téléphone intelligent (« smartphone » en anglais) connecté par une liaison sans-fil au nœud N2 122, c'est-à-dire que le terminal T1 141 est ainsi connecté via le réseau local sans-fil WLAN grâce au nœud N2 122 agissant comme point d'accès AP. Le terminal T2 142 est par exemple un téléviseur connecté par une liaison filaire au nœud N2 122. Le terminal T3 143 est par exemple une tablette connectée par une liaison sans-fil au nœud N4 124, c'est-à-dire que le terminal T3 143 est ainsi connecté via le réseau local sans-fil WLAN grâce au nœud N4 124 agissant comme point d'accès AP. Le terminal T4 144 est par exemple une unité de stockage en réseau NAS (« Network Attached Storage » en anglais) connecté par une liaison sans-fil au nœud N3 123, c'est-à-dire que le terminal T4 144 est ainsi connecté via le réseau local sans-fil WLAN grâce au nœud N3 123 agissant comme point d'accès AP.

Les nœuds du sous-réseau d'acheminement sont coordonnés de manière centralisée, par un nœud maître parmi lesdits nœuds du sous-réseau d'acheminement. Le nœud maître peut être désigné par configuration figée ou dynamiquement par élection. Le nœud maître est par exemple le nœud du sous-réseau d'acheminement qui est au plus près de la passerelle GW 110 d'accès à l'Internet, à savoir le nœud N1 121 dans le contexte de la Fig. 1. Un mode de réalisation particulier d'élection du nœud maître pour être au plus près de la passerelle GW 110 d'accès à l'Internet est détaillé ci-après en relation avec la Fig. 8.

Tous les nœuds du sous-réseau d'acheminement ont ainsi connaissance du nœud maître, et sont capables de l'identifier grâce à son adresse MAC et/ou de son adresse réseau (e.g., adresse IP). Tous les nœuds du sous-réseau d'acheminement ont aussi connaissance de tous les autres nœuds du sous-réseau d'acheminement et sont capables de les identifier grâce à leurs adresses MAC et/ou de leurs adresses réseau (e.g., adresses IP).

La **Fig. 2** illustre schématiquement un exemple d'architecture matérielle de tout nœud 200 du sous-réseau d'acheminement.

L'exemple d'architecture matérielle présenté comporte, reliés par un bus de communication 210 : un processeur CPU (« Central Processing Unit » en anglais) 201 ; une mémoire vive RAM (« Random Access Memory » en anglais) 202 ; une mémoire morte ROM (« Read Only Memory » en anglais) 203 ou une mémoire Flash ; une unité de stockage ou un lecteur de support de stockage, tel qu'un lecteur de cartes SD (« Secure Digital » en anglais) 204 ou un disque dur HDD (« Hard Disk Drive » en anglais) ; et au moins un ensemble d'interfaces de communication COM 205. L'ensemble d'interfaces de communication COM 205 permet d'implémenter la fonctionnalité de point d'accès AP pour étendre la couverture du réseau local sans-fil WLAN et permet de mettre en place le sous-réseau d'acheminement.

Le processeur CPU 201 est capable d'exécuter des instructions chargées dans la mémoire RAM 202 à partir de la mémoire ROM 203, d'une mémoire externe (telle qu'une carte SD), d'un support de stockage (tel que le disque dur HDD), ou d'un réseau de communication. Lors de la mise sous tension, le processeur CPU 201 est capable de lire de la mémoire RAM 202 des instructions et de les exécuter. Ces instructions forment un programme d'ordinateur causant la mise en œuvre, par le processeur CPU 201, de tout ou partie des algorithmes et étapes décrits ci-après.

Ainsi, tout ou partie des algorithmes et étapes décrits ci-après peut être implémenté sous forme logicielle par exécution d'un ensemble d'instructions par une machine programmable, telle qu'un DSP (« Digital Signal Processor » en anglais) ou un microcontrôleur ou un processeur. Tout ou partie des algorithmes et étapes décrits ci-après peut aussi être implémenté sous forme matérielle par une machine ou un composant dédié, tel qu'un FPGA (« Field-Programmable Gate Array » en anglais) ou un ASIC (« Application-Specific Integrated Circuit » en anglais). Ainsi, les nœuds N1 121, N2 122, N3 123, N4 124 comportent de la circuiterie électronique adaptée et configurée pour implémenter les algorithmes et étapes décrits ci-après.

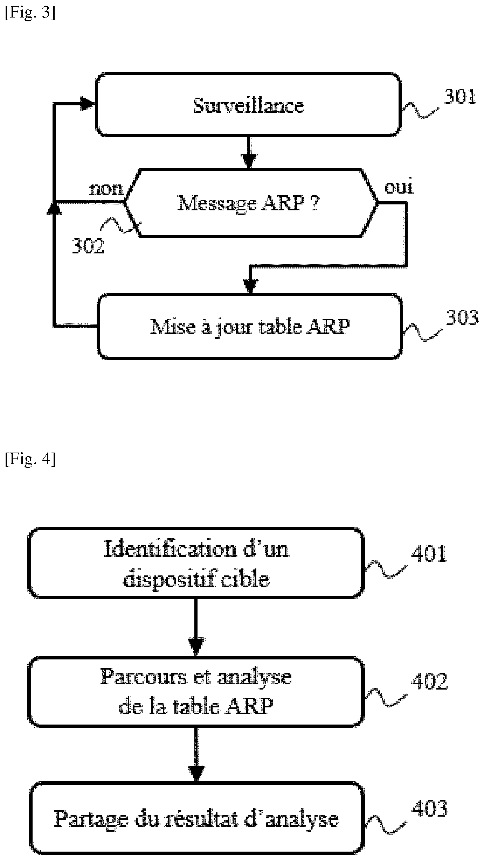

La **Fig. 3** illustre schématiquement un algorithme de mise à jour de table de résolution d'adresses.

Lorsqu'un dispositif se connecte à un réseau de communication, une phase de résolution d'adresses est mise en place. Cela permet aux différents dispositifs du réseau de communication de faire l'association entre adresse réseau et adresse MAC. Dans le cas des réseaux Ethernet, le protocole ARP (« Address Resolution Protocol » en anglais, tel que décrit dans le document normatif RFC 826) est ainsi implémenté automatiquement, e.g., par le noyau du système d'exploitation, pour permettre aux équipements de collecter les informations nécessaires à la mise en communication et ainsi faire coïncider toute adresse IP du réseau local LAN avec l'adresse MAC correspondante.

Pour effectuer une résolution d'adresse envers un dispositif B avec lequel un dispositif A souhaite communiquer, le dispositif A diffuse une requête ARP dans le réseau de communication, ici le réseau local LAN. La requête ARP identifie les adresses réseau et MAC du dispositif A, ainsi que l'adresse réseau du dispositif B. La décomposition de la requête ARP, selon le document normatif RFC 826, montre que ces informations d'identification sont transmises physiquement au travers des champs ar$sha qui prend la valeur @MAC_A (où @MAC_A est l'adresse MAC du dispositif A), ar$spa qui prend la valeur @IP_A (où @IP_A est l'adresse IP du dispositif A), et ar$tpa qui prend la valeur @IP_B (où @IP_B est l'adresse IP du dispositif B). Quant au champ ar$tha, celui-ci prend la valeur « 0 », car à cet instant, l'adresse MAC (@MAC_B) du dispositif B est inconnue du dispositif A.

Les dispositifs du réseau local LAN dont l'adresse IP ne correspond pas à @IP_B vont simplement ignorer cette requête ARP. Cependant chaque nœud du sous-réseau d'acheminement va en profiter pour renseigner une table ARP qui lui est propre, en y inscrivant le couple @IP_A/@MAC_A correspondant au dispositif A à l'origine de la requête ARP. De plus, chaque nœud du sous-réseau d'acheminement y inscrit, en association le couple @IP_A/@MAC_A, une information INT représentative de l'interface dudit nœud via laquelle la requête ARP a été reçue par ledit nœud. Y inscrire l'information INT permet audit nœud de savoir quelle interface utiliser pour joindre le dispositif A. En reprenant l'exemple de la Fig. 1, lorsque le terminal T1 141 diffuse une telle requête ARP, le nœud N2 122 stocke dans sa table ARP, en association avec l'adresse MAC et IP du terminal T1 141 indiquées dans la requête ARP en question, une information représentant l'interface sans-fil avec le réseau local sans-fil WLAN. De même, lorsque le terminal T2 142 diffuse une telle requête ARP, le nœud N2 122 stocke dans sa table ARP, en association avec l'adresse MAC et IP du terminal T2 142 indiquées dans la requête ARP en question, une information représentant l'interface filaire sur laquelle est connecté le terminal T2 142. Et du point de vue du nœud N4 124, la table ARP inclut en association avec l'adresse MAC et IP du terminal T1 141 une information représentant l'interface filaire utilisée avec le nœud N3 123 (via lequel la requête ARP émanant du terminal T1 141 a été relayée jusqu'au nœud N2 122). De même, la table ARP du nœud N4 124 inclut en association avec l'adresse MAC et IP du terminal T2 142 une information représentant l'interface filaire utilisée avec le nœud N3 123 (via lequel la requête ARP émanant du terminal T2 142 a été relayée jusqu'au nœud N2 122).

Le dispositif B, dont l'adresse IP correspond à @IP_B tel qu'indiqué dans la requête ARP diffusée, répond à la requête ARP diffusée par le dispositif A en transmettant une réponse ARP à destination unique du dispositif A, permettant ainsi au dispositif A de renseigner sa table ARP par le couple @IP_B/@MAC_B ainsi découvert. Chaque nœud du sous-réseau d'acheminement qui voit transiter la réponse ARP peut aussi renseigner sa propre table ARP avec le couple @IP_B/@MAC_B, ainsi qu'en association avec une information représentative de l'interface dudit nœud via laquelle la réponse ARP a été reçue par ledit nœud. Y inscrire l'information représentative de cette interface permet audit nœud de savoir quelle interface utiliser pour joindre le dispositif B.

Par commodité, les tables de résolution d'adresses sont dénommées ci-après *tables ARP.*

Ainsi, dans une étape 301, chaque nœud du sous-réseau d'acheminement (i.e., chaque nœud du système d'extension de couverture de communication sans-fil) surveille les échanges survenant dans la phase de résolution d'adresses. Pour ce faire, chaque nœud du sous-réseau d'acheminement écoute en permanence, sur chacune de ses interfaces physiques prises individuellement, les messages diffusés par l'ensemble des dispositifs du réseau.

Dans une étape 302, tout nœud ayant reçu un message détermine si le message reçu correspond à une requête ARP diffusée. Si tel est le cas, une étape 303 est effectuée ; sinon, l'étape 301 est répétée.

Dans l'étape 303, chaque nœud ayant reçu une requête ARP diffusée complète sa table ARP, comme précédemment expliqué.

L'algorithme de la Fig. 3 peut être complété de sorte à complète la table ARP grâce aux réponses ARP reçues (e.g., en transit), comme précédemment expliqué.

Pour chaque nœud, la table ARP est ainsi complétée au fil du temps et se stabilise jusqu'à ce que survienne un changement de topologie (e.g., ajout ou suppression d'un nœud, plus généralement d'un dispositif, au réseau local LAN).

A noter que les entrées de la table ARP correspondant aux autres nœuds du sous-réseau d'acheminement sont aisément identifiables. En effet, lors de la mise en place du sous-réseau d'acheminement, des échanges sont effectués entre les nœuds dudit sous-réseau d'acheminement, et chaque nœud peut ainsi construit une liste contenant au moins les adresses réseau (e.g., adresses IP) des nœuds constitutifs du sous-réseau d'acheminement. Cette liste peut également contenir des informations complémentaires, comme par exemple des numéros de série des nœuds en question ou toute autre information nécessaire pour assurer un fonctionnement nominal du système d'extension de couverture de communication sans-fil.

La **Fig. 4** illustre schématiquement un algorithme d'analyse de table ARP. L'algorithme de la Fig. 4 est mis en œuvre par un nœud du sous-réseau d'acheminement vis-à-vis de sa propre table ARP ou vis-à-vis d'une table ARP d'un autre nœud du sous-réseau d'acheminement qui lui a été communiquée par cet autre nœud (par exemple parce qu'une analyse des tables ARP est effectuée de manière centralisée). L'objectif est d'identifier le nœud du sous-réseau d'acheminement qui est au plus près, d'un point de vue localisation topologique, d'un dispositif cible dans le réseau local LAN. Cet objectif peut être atteint grâce aux tables ARP. L'algorithme de la Fig. 4 décrit les étapes réalisées pour une table ARP.

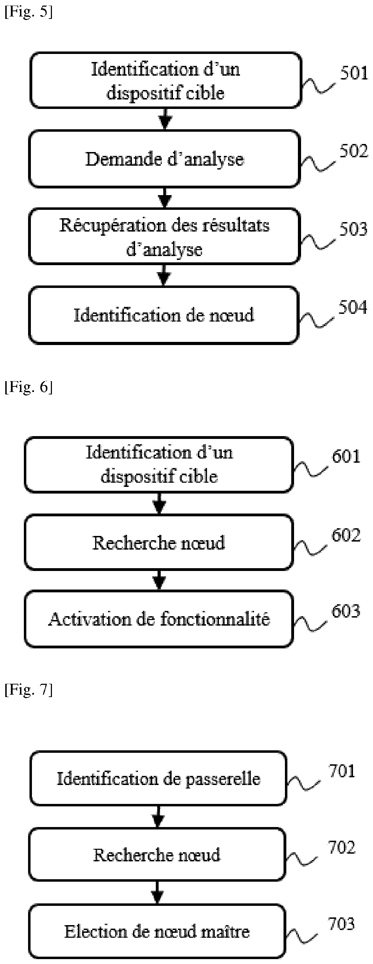

Dans une étape 401, le nœud en question obtient une information identifiant le dispositif cible dans le réseau local LAN. Le dispositif cible est par exemple identifié grâce à son adresse réseau (e.g., adresse IP). Cette information peut être fournie par un autre nœud du sous-réseau d'acheminement ; par exemple, le nœud maître peut demander à chacun des nœuds du sous-réseau d'acheminement d'effectuer l'analyse de sa propre table ARP, tel que décrit ci-après en relation avec la Fig. 5. Cette information peut en variante être connue à l'avance. Par exemple, l'analyse de table ARP est effectuée par défaut en utilisant comme dispositif cible la passerelle GW 110 d'accès à l'Internet, notamment pour élire le nœud maître, tel que décrit ci-après en relation avec la Fig. 8.

Dans une étape 402, le nœud en question parcourt et analyse la table ARP, de sorte à repérer si le dispositif cible y est référencé. Si la table ARP référence effectivement le dispositif cible, le nœud en question récupère l'information INT stockée en association. Ensuite, le nœud en question compte dans la table ARP combien de nœuds du sous-réseau d'acheminement (i.e., du système d'extension de couverture de communication sans-fil) sont inscrits dans la table ARP en association avec cette interface représentée par l'information INT. Si aucun nœud du sous-réseau d'acheminement n'est référencé en association avec cette interface représentée par l'information INT, cela signifie que le nœud dont la table ARP est ainsi parcourue est au plus près du dispositif cible. Si au moins un nœud du sous-réseau d'acheminement est référencé en association avec cette interface représentée par l'information INT, cela signifie que le nœud dont la table ARP est ainsi parcourue n'est pas au plus près du dispositif cible.

Dans une étape 403, le nœud en question partage, au besoin, le résultat de l'analyse effectuée à l'étape 402. Par exemple, lorsque le nœud en question a analysé sa propre table ARP, le nœud en question transmet un message indiquant si ledit nœud en question est au plus près, ou pas, du dispositif cible parmi les nœuds du sous-réseau d'acheminement. Selon un autre exemple, toujours lorsque le nœud en question a analysé sa propre table ARP, le nœud en question transmet un message fournissant un score d'analyse représentatif de la distance topologique, au sein du sous-réseau d'acheminement, qui le sépare du dispositif cible.

En procédant ainsi pour chaque table ARP des nœuds du sous-réseau d'acheminement, il est possible d'identifier quel nœud est au plus près du dispositif cible connecté au LAN. Cela peut être fait de manière centralisée, par exemple par le nœud maître, en récupérant les tables ARP auprès des différents nœuds du sous-réseau d'acheminement. Cela peut être fait de manière distribuée par les différents nœuds du sous-réseau d'acheminement, qui communiquent alors le résultat de leurs analyses respectives au nœud maître, comme décrit ci-après en relation avec la Fig. 5.

Dans un mode de réalisation particulier, chaque nœud du sous-réseau d'acheminement effectue cette analyse pour un ou plusieurs dispositifs cible prédéterminés, à chaque changement apporté à sa table ARP. Par exemple, lorsqu'un changement est apporté à sa table ARP, le nœud en question effectue l'analyse pour déterminer s'il est au plus près de la passerelle GW 110 d'accès à l'Internet. Si le nœud en question détermine qu'il devient le nœud au plus près de la passerelle GW 110 d'accès à l'Internet, alors il peut s'auto-attribuer le rôle de nœud maître et en informer les autres nœuds du sous-réseau d'acheminement. Une négociation peut aussi intervenir avec le nœud qui était jusqu'alors le nœud maître, en cas de résultats d'analyse discordants (situation qui révèle une anomalie du fait que le sous-réseau d'acheminement est en forme d'arbre).

Dans un mode de réalisation particulier, l'analyse des tables ARP est effectuée en excluant les entrées des tables ARP qui correspondent à des interfaces sur lesquelles il est prédéterminé que le dispositif cible n'est pas connecté. Par exemple, lorsque le dispositif cible est la passerelle GW 110 d'accès à l'Internet et qu'il est prédéfini que la passerelle GW 110 d'accès à l'Internet est nécessairement connectée par liaison filaire au système d'extension de couverture de communication sans-fil, l'analyse des tables ARP est effectuée en excluant tout entrée associée à une interface sans-fil. Cette exclusion d'entrées des tables ARP dans l'analyse peut être prédéfinie ou notifiée par le nœud maître lorsqu'il demande aux nœuds du sous-réseau d'acheminement d'effectuer les analyses de tables ARP

La **Fig. 5** illustre schématiquement un algorithme d'identification de nœud au plus proche d'un dispositif en particulier (dispositif cible). L'algorithme de la Fig. 5 est implémenté par le nœud maître.

Dans une étape 501, le nœud maître identifie un dispositif cible. Par exemple, le dispositif cible est la passerelle GW 110 d'accès à l'Internet, ou bien le terminal T2 142. Le dispositif cible peut être identifié par configuration (e.g., saisie de son adresse IP). Le dispositif cible peut être identifié suite à un événement au sein du réseau local LAN (e.g. branchement d'un nouveau dispositif, qui devient alors le dispositif cible au sens de l'algorithme de la Fig. 5). Par exemple, la passerelle GW 110 d'accès à l'Internet peut être identifiée grâce à un bail (attribution d'adresse IP) fourni par un serveur DHCP (« Dynamic Host Configuration Protocol » en anglais, tel que défini par le document normatif RFC 1531, modifié et complété par les documents normatifs RFC 1534, RFC 2131 et RFC 2132), qui est généralement intégré à ladite passerelle d'accès à l'Internet. Lorsque ledit serveur DHCP fournit un bail (attribution d'adresse IP) à un nœud du sous-réseau d'acheminement, que le serveur DHCP soit ou pas dans la passerelle d'accès à l'Internet, le bail en question fournit dans un champ dédié l'adresse IP de ladite passerelle d'accès à l'Internet. Ainsi, tout nœud du sous-réseau d'acheminement a connaissance de l'adresse IP de la ladite passerelle d'accès à l'Internet. Selon un autre exemple, un dispositif nouvellement connecté au système d'extension de couverture de communication sans-fil peut exporter un descriptif des fonctionnalités offertes par ce dispositif nouvellement connecté (e.g., en utilisant le protocole UPnP (« Universal Plug n' Play » en anglais) et le contenu de ce descriptif peut pousser le nœud maître à requérir l'analyse des tables ARP pour déterminer quel nœud est au plus près dudit dispositif nouvellement connecté. Bien d'autres événements peuvent être déclencheurs de l'algorithme de la Fig. 5 et identifier le dispositif cible.

Dans une étape 502, le nœud maître demande une analyse de table ARP vis-à-vis du dispositif cible, auprès de chacun des nœuds du sous-réseau d'acheminement. Chacun des nœuds du sous-réseau d'acheminement (y compris le nœud maître) effectue alors l'analyse de table ARP, tel que décrite en relation avec la Fig. 4, vis-à-vis de sa propre table ARP.

Dans une étape 503, le nœud maître récupère les résultats des analyses de tables ARP effectuées par les nœuds du sous-réseau d'acheminement.

Dans une étape 504, le nœud maître identifie, grâce auxdits résultats, le nœud du sous-réseau d'acheminement qui est au plus près du dispositif cible parmi tous les nœuds du sous-réseau d'acheminement.

A noter que le nœud maître peut demander l'analyse de table ARP vis-à-vis du dispositif cible de manière séquentielle. Le nœud maître demande aux nœuds de faire l'analyse de table ARP les uns après les autres, et stoppe le processus dès lors qu'un nœud indique dans son résultat d'analyse de table ARP que ledit nœud est au plus près du dispositif cible parmi tous les nœuds du sous-réseau d'acheminement.

La **Fig. 6** illustre schématiquement un algorithme d'activation de fonctionnalité spécifiquement dans un nœud identifié au plus proche d'un dispositif en particulier (dispositif cible).

Dans une étape 601, le nœud maître identifie un dispositif cible, comme déjà décrit en relation avec la Fig. 5.

Dans une étape 602, le nœud maître lance une recherche de nœud, au plus proche du dispositif cible, par analyse des tables ARP, comme précédemment décrit.

Dans une étape 603, le nœud maître connaît, grâce à l'analyse des tables ARP, quel nœud du sous-réseau d'acheminement est au plus proche du dispositif cible. Le nœud maître instruit spécifiquement alors ce nœud qui est identifié comme étant au plus proche du dispositif cible d'activer une fonctionnalité prédéterminée. Par exemple, cette fonctionnalité est une fonctionnalité de support du dispositif cible en question, e.g., un module de contrôle dudit dispositif cible. Activer spécifiquement la fonctionnalité au plus près du dispositif cible permet de limiter la distance entre le dispositif cible et la fonctionnalité en question, ce qui est plus efficace en termes de consommation de ressources réseau.

La **Fig. 7** illustre schématiquement un algorithme d'élection de nœud maître du sous-réseau d'acheminement.

Dans une étape 701, le nœud maître identifie un dispositif cible, comme déjà décrit en relation avec la Fig. 5. Le dispositif cible est, dans le cadre de l'algorithme de la Fig. 7, la passerelle GW 110 d'accès à l'Internet.

Dans une étape 702, le nœud maître lance une recherche de nœud, au plus proche du dispositif cible, par analyse des tables ARP, comme précédemment décrit.

Dans une étape 703, le nœud au plus proche du dispositif cible est spécifiquement élu comme dispositif maître. S'il y a changement de nœud maître, le précédent nœud maître informe les autres nœuds du sous-réseau d'acheminement qu'un nouveau nœud maître a été élu et fournit une information identifiant le nouveau nœud maître. L'algorithme de la Fig. 7 est ainsi un mode de réalisation particulier de l'algorithme de la Fig. 6, où la fonctionnalité à activer est la fonctionnalité de nœud maître. D'autres fonctionnalités complémentaires peuvent ainsi être spécifiquement activées au sein du nœud maître vis-à-vis de la passerelle GW 110 d'accès à l'Internet. Plus particulièrement, de telles fonctionnalités complémentaires sont des fonctionnalités de pare-feu vis-à-vis de flux de données échangés via l'Internet au travers de la passerelle GW 110 d'accès à l'Internet et/ou des fonctionnalités de contrôle parental vis-à-vis de flux de données échangés via l'Internet au travers de la passerelle GW 110 d'accès à l'Internet. Activer la fonctionnalité au plus près de la passerelle GW 110 d'accès à l'Internet permet de limiter la distance entre la passerelle GW 110 d'accès à l'Internet et la fonctionnalité en question, ce qui est plus efficace en termes de consommation de ressources réseau et en termes de sécurité des dispositifs du réseau local LAN vis-à-vis de ces flux de données échangés via l'Internet au travers de la passerelle GW 110 d'accès à l'Internet.

## Revendications

1. Procédé d'identification d'un nœud (121, 122) au plus près d'un dispositif cible (110, 142) dans un système d'extension de couverture de communication sans-fil comportant un sous-réseau d'acheminement en forme d'arbre comportant un ensemble de nœuds interconnectés (121, 122, 123, 124), une pluralité de nœuds (121, 122, 123, 124) du sous-réseau d'acheminement implémentant une fonctionnalité de point d'accès d'un même réseau de communication sans-fil, le système d'extension de couverture de communication sans-fil étant adapté pour permettre de connecter des dispositifs (110, 141, 142, 143, 144) comportant ledit dispositif cible (110, 142), auxdits nœuds (121, 122, 123, 124) par le biais du réseau de communication sans-fil ou de manière filaire afin de former un réseau local, le procédé comportant les étapes suivantes :
- surveiller (301) des messages échangés lors d'une phase de résolution d'adresses, et en obtenir une association entre adresse réseau et adresse Medium Access Control, MAC, de chaque dispositif (110, 141, 142, 143, 144) connecté au réseau local et nœud (121, 122, 123, 124) du sous-réseau d'acheminement ;
- remplir (303), dans chaque dit nœud (121, 122, 123, 124), une table de résolution d'adresses en y indiquant chaque association entre adresse réseau et adresse MAC obtenue par ledit nœud (121, 122, 123, 124), ainsi qu'une information d'interface représentant une interface dudit nœud (121, 122, 123, 124) via laquelle le message ayant permis d'obtenir ladite association a été reçu ;
et pour identifier le nœud (121, 122) au plus près du dispositif cible (110, 142) parmi lesdits nœuds (121, 122, 123, 124) du sous-réseau d'acheminement, le procédé comporte une analyse des tables de résolution incluant les étapes suivantes :
- parcourir (402) les tables de résolution d'adresses en recherchant l'association entre adresse réseau et adresse MAC correspondant audit dispositif cible (110, 142), et en obtenir l'information d'interface associée ; et
- identifier le nœud (121, 122) au plus près du dispositif cible (110, 142) comme étant le nœud dont la table de résolution d'adresses ne référence aucun nœud du sous-réseau d'acheminement en association avec ladite information d'interface.

2. Procédé selon la revendication 1, dans lequel chaque nœud (121, 122, 123, 124) du sous-réseau d'acheminement parcourt sa propre table de résolution de sorte à repérer si le dispositif cible y est référencé et, selon l'identification du nœud (121, 142) au plus près du dispositif cible (110, 142) transmet un message indiquant si ledit nœud en question (121, 122, 123, 124) est au plus près du dispositif cible (110, 142) parmi les nœuds (121, 122, 123, 124) du sous-réseau d'acheminement, le nœud au plus près étant le nœud dont la table de résolution ne comporte aucun nœud référencé en association avec l'information d'interface représentant l'interface dudit nœud (121, 122, 123, 124) via laquelle le message ayant permis d'obtenir ladite association a été reçu.

3. Procédé selon la revendication 1, dans lequel chaque nœud (121, 122, 123, 124) du sous-réseau d'acheminement parcourt sa propre table de résolution et transmet un message incluant un score d'analyse représentatif de la distance topologique, au sein du sous-réseau d'acheminement, qui le sépare du dispositif cible (110, 142).

4. Procédé selon l'une quelconque des revendications 1 à 3, dans lequel chaque nœud (121, 122, 123, 124) du sous-réseau d'acheminement effectue l'analyse pour un ou plusieurs dispositifs cible (110, 142) prédéterminés, à chaque changement apporté à sa table de résolution d'adresses.

5. Procédé selon l'une quelconque des revendications 1 à 4, dans lequel l'analyse des tables de résolution d'adresses est effectuée en excluant les entrées des tables de résolution d'adresses qui correspondent à des interfaces sur lesquelles il est prédéterminé que le dispositif cible (110, 142) n'est pas connecté.

6. Procédé selon l'une quelconque des revendications 1 à 5, dans lequel le dispositif cible est une passerelle (110) d'accès à l'Internet, qui a été identifiée grâce à un champ dédié d'un bail fourni à un nœud (121, 122, 123, 124) du sous-réseau d'acheminement par un serveur Dynamic Host Configuration Protocol, DHCP.

7. Procédé d'activation de fonctionnalité dans un système d'extension de couverture de communication sans-fil comportant un sous-réseau d'acheminement en forme d'arbre comportant un ensemble de nœuds interconnectés (121, 122, 123, 124), le procédé incluant une identification d'un nœud (121, 122) au plus près d'un dispositif cible (110, 142) parmi lesdits nœuds du sous-réseau d'acheminement selon l'une des revendications 1 à 6 et en outre une activation (603, 703) de ladite fonctionnalité spécifiquement dans le nœud identifié comme étant au plus près du dispositif cible.

8. Procédé selon la revendication 7, dans lequel le dispositif cible est une passerelle (110) d'accès à l'Internet et la fonctionnalité est une fonctionnalité de nœud maître coordonnant le sous-réseau d'acheminement.

9. Procédé selon la revendication 8, comportant en outre une activation de fonctionnalités complémentaires dans le nœud (121) identifié comme étant au plus près de la passerelle (110) d'accès à l'Internet, les fonctionnalités complémentaires étant des fonctionnalités de pare-feu vis-à-vis de flux de données échangés via l'Internet au travers de la passerelle (110) d'accès à l'Internet et/ou des fonctionnalités de contrôle parental vis-à-vis de flux de données échangés via l'Internet au travers de la passerelle (110) d'accès à l'Internet.

10. Système d'extension de couverture de communication sans-fil comportant un sous-réseau d'acheminement en forme d'arbre comportant un ensemble de nœuds interconnectés (121, 122, 123, 124), une pluralité de nœuds (121, 122, 123, 124) du sous-réseau d'acheminement implémentant une fonctionnalité de point d'accès d'un même réseau de communication sans-fil, le système d'extension de couverture de communication sans-fil étant adapté pour permettre de connecter des dispositifs (110, 141, 142, 143, 144) comportant un dispositif cible (110, 142), auxdits nœuds (121, 122, 123, 124) par le biais du réseau de communication sans-fil ou de manière filaire afin de former un réseau local, le système comportant:
- des moyens pour surveiller (301) des messages échangés lors d'une phase de résolution d'adresses, et en obtenir une association entre adresse réseau et adresse Medium Access Control, MAC, de chaque dispositif (110, 141, 142, 143, 144) connecté au réseau local et nœud (121, 122, 123, 124) du sous-réseau d'acheminement ;
- des moyens pour remplir (303), dans chaque dit nœud (121, 122, 123, 124), une table de résolution d'adresses en y indiquant chaque association entre adresse réseau et adresse MAC obtenue par ledit nœud (121, 122, 123, 124), ainsi qu'une information d'interface représentant une interface dudit nœud (121, 122, 123, 124) via laquelle le message ayant permis d'obtenir ladite association a été reçu ;
et pour identifier un nœud (121, 122) au plus près du dispositif cible (110, 142) parmi lesdits nœuds (121, 122, 123, 124) du sous-réseau d'acheminement, le système comporte des moyens pour analyser les tables de résolution incluant :
- des moyens pour parcourir (402) les tables de résolution d'adresses en recherchant l'association entre adresse réseau et adresse MAC correspondant audit dispositif cible (110, 142), et en obtenir l'information d'interface associée ; et
- des moyens pour identifier (504) le nœud (121, 122) au plus près du dispositif cible (110, 142) comme étant le nœud dont la table de résolution d'adresses ne référence aucun nœud du sous-réseau d'acheminement en association avec ladite information d'interface.

11. Système selon la revendication 10, comportant en outre des moyens pour activer une fonctionnalité spécifiquement dans le nœud identifié comme étant au plus près du dispositif cible.

12. Système selon la revendication 11, dans lequel le dispositif cible est une passerelle d'accès à l'Internet et la fonctionnalité est une fonctionnalité de nœud maître coordonnant le sous-réseau d'acheminement.

13. Système selon la revendication 12, comportant en outre des moyens pour activer des fonctionnalités complémentaires spécifiquement dans le nœud identifié comme étant au plus près de la passerelle d'accès à l'Internet, les fonctionnalités complémentaires étant des fonctionnalités de pare-feu vis-à-vis de flux de données échangés via l'Internet au travers de la passerelle d'accès à l'Internet et/ou des fonctionnalités de contrôle parental vis-à-vis de flux de données échangés via l'Internet au travers de la passerelle d'accès à l'Internet.

14. Nœud, appelé nœud considéré, destiné à être utilisé dans un système d'extension de couverture de communication sans-fil comportant un sous-réseau d'acheminement en forme d'arbre comportant un ensemble de nœuds interconnectés (121, 122, 123, 124) dont le nœud considéré, une pluralité de nœuds (121, 122, 123, 124) du sous-réseau d'acheminement implémentant une fonctionnalité de point d'accès d'un même réseau de communication sans-fil, le système d'extension de couverture de communication sans-fil étant adapté pour permettre de connecter des dispositifs (110, 141, 142, 143, 144) comportant un dispositif cible (110, 142), auxdits nœuds (121, 122, 123, 124) par le biais du réseau de communication sans-fil ou de manière filaire afin de former un réseau local, le nœud considéré comportant:
- des moyens pour surveiller (301) des messages échangés lors d'une phase de résolution d'adresses, et en obtenir une association entre adresse réseau et adresse Medium Access Control, MAC, de chaque dispositif (110, 141, 142, 143, 144) connecté au réseau local et nœud (121, 122, 123, 124) du sous-réseau d'acheminement ;
- des moyens pour remplir (303) une table de résolution d'adresses en y indiquant chaque association entre adresse réseau et adresse MAC obtenue par le nœud considéré, ainsi qu'une information d'interface représentant une interface du nœud considéré via laquelle le message ayant permis d'obtenir ladite association a été reçu ;
et pour identifier si le nœud considéré est au plus près du dispositif cible (110, 142) parmi lesdits nœuds (121, 122, 123, 124) du sous-réseau d'acheminement, le nœud considéré comporte des moyens pour analyser sa table de résolution incluant :
- des moyens pour parcourir (402) la table de résolution d'adresses en recherchant l'association entre adresse réseau et adresse MAC correspondant audit dispositif cible (110, 142), et en obtenir l'information d'interface associée ; et
- des moyens pour identifier le nœud considéré comme étant au plus près du dispositif cible (110, 142) lorsque la table de résolution d'adresses ne référence aucun nœud du sous-réseau d'acheminement en association avec ladite information d'interface, et pour identifier le nœud considéré comme n'étant pas au plus près du dispositif cible (110, 142) sinon ; et
- des moyens pour informer, via le sous-réseau d'acheminement, que le nœud considéré est ou pas le nœud au plus près du dispositif cible (110, 142) parmi lesdits nœuds (121, 122, 123, 124) du sous-réseau d'acheminement.

## Patentansprüche

1. Verfahren zur Identifizierung eines nächstgelegenen Knotens (121, 122) zu einer Zielvorrichtung (110, 142) in einem Erweiterungssystem zur Abdeckung drahtloser Kommunikation, umfassend ein Weglenkungsteilnetz in Baumform, umfassend eine Gruppe miteinander verbundener Knoten (121, 122, 123, 124), wobei eine Vielzahl von Knoten (121, 122, 123, 124) des Weglenkungsteilnetzes eine Funktionalität eines Zugangspunktes eines gemeinsamen drahtlosen Kommunikationsnetzes implementieren, wobei das Erweiterungssystem zur Abdeckung drahtloser Kommunikation dazu geeignet ist, eine Verbindung der Vorrichtungen (110, 141, 142, 143, 144), die die Zielvorrichtung (110, 142) umfassen, mit den Knoten (121, 122, 123, 124) über das drahtlose Kommunikationsnetz oder drahtgebunden zu ermöglichen, um ein lokales Netz zu bilden, wobei das Verfahren die folgenden Schritte umfasst:
- Überwachen (301) der ausgetauschten Nachrichten in einer Phase der Adressenauflösung und daraus Erhalten einer Zuordnung zwischen der Netzadresse und der Medium Access Control(MAC)-Adresse jeder Vorrichtung (110, 141, 142, 143, 144), die mit dem lokalen Netz und Knoten (121, 122, 123, 124) des Weglenkungsteilnetzes verbunden ist;
- Ausfüllen (303) einer Adressenauflösungstabelle in jedem Knoten (121, 122, 123, 124), indem darin jede Zuordnung zwischen Netzadresse und MAC-Adresse, die vom Knoten (121, 122, 123, 124) erhalten wurde, sowie eine Schnittstelleninformation angegeben wird, die eine Schnittstelle des Knotens (121, 122, 123, 124) darstellt, über die die Nachricht, die den Erhalt der Zuordnung ermöglicht hat, empfangen wurde;
und zum Identifizieren des nächstgelegenen Knotens (121, 122) zu der Zielvorrichtung (110, 142) unter den Knoten (121, 122, 123, 124) des Weglenkungsteilnetzes umfasst das Verfahren eine Analyse der Auflösungstabellen, die die folgenden Schritte aufweist:
- Durchsuchen (402) der Adressenauflösungstabellen, indem die Zuordnung zwischen Netzadresse und MAC-Adresse, die der Zielvorrichtung (110, 142) entspricht, gesucht wird und daraus Erhalten der zugeordneten Schnittstelleninformation; und
- Identifizieren des nächstgelegenen Knotens (121, 122) zu der Zielvorrichtung (110, 142) als den Knoten, dessen Adressenauflösungstabelle keinen Knoten des Weglenkungsteilnetzes in Zuordnung zu der Schnittstelleninformation referenziert.

2. Verfahren nach Anspruch 1, wobei jeder Knoten (121, 122, 123, 124) des Weglenkungsteilnetzes seine eigene Auflösungstabelle derart durchsucht, um zu ermitteln, ob die Zielvorrichtung darin referenziert ist, und entsprechend der Identifizierung des nächstgelegenen Knotens (121, 142) zu der Zielvorrichtung (110, 142) eine Nachricht überträgt, die angibt, ob der betreffende Knoten (121, 122, 123, 124) unter den Knoten (121, 122, 123, 124) des Weglenkungsteilnetzes der nächstgelegene zu der Zielvorrichtung (110, 142) ist, wobei der nächstgelegene Knoten der Knoten ist, dessen Auflösungstabelle keinen Knoten umfasst, der in Zuordnung zu der Schnittstelleninformation referenziert ist, die die Schnittstelle des Knotens (121, 122, 123, 124) darstellt, über die die Nachricht, die den Erhalt der Zuordnung ermöglich hat, empfangen wurde.

3. Verfahren nach Anspruch 1, wobei jeder Knoten (121, 122, 123, 124) des Weglenkungsteilnetzes seine eigene Auflösungstabelle durchsucht und eine Nachricht überträgt, die einen Analysepunktwert aufweist, der für die topologische Entfernung innerhalb des Weglenkungsteilnetzes, die ihn von der Zielvorrichtung (110, 142) trennt, repräsentativ ist.

4. Verfahren nach einem der Ansprüche 1 bis 3, wobei jeder Knoten (121, 122, 123, 124) des Weglenkungsteilnetzes bei jeder Änderung, die an seiner Adressenauflösungstabelle vorgenommen wird, die Analyse für eine oder mehrere vorgegebene Zielvorrichtungen (110, 142) durchführt.

5. Verfahren nach einem der Ansprüche 1 bis 4, wobei die Analyse der Adressenauflösungstabelle durchgeführt wird, indem die Einträge der Adressenauflösungstabellen ausgeschlossen werden, die Schnittstellen entsprechen, bei denen vorgegeben ist, dass die Zielvorrichtung (110, 142) darüber nicht verbunden ist.

6. Verfahren nach einem der Ansprüche 1 bis 5, wobei die Zielvorrichtung ein Internet-Zugangsgateway (110) ist, das aufgrund eines dedizierten Felds eines Nutzungsrechts, das einem Knoten (121, 122, 123, 124) des Weglenkungsteilnetzes durch einen Dynamic Host Configuration Protocol(DHCP)-Server bereitgestellt wird, identifiziert wurde.

7. Verfahren zur Aktivierung der Funktionalität in einem Erweiterungssystem zur Abdeckung drahtloser Kommunikation, umfassend ein Weglenkungsteilnetz in Baumform, umfassend eine Gruppe miteinander verbundener Knoten (121, 122, 123, 124), wobei das Verfahren eine Identifizierung eines nächstgelegenen Knotens (121, 122) zu einer Zielvorrichtung (110, 142) unter den Knoten des Weglenkungsteilnetzes nach einem der Ansprüche 1 bis 6 aufweist und außerdem eine Aktivierung (603, 703) der Funktionalität spezifisch in dem Knoten, der als der nächstgelegene zu der Zielvorrichtung identifiziert wurde.

8. Verfahren nach Anspruch 7, wobei die Zielvorrichtung ein Internet-Zugangsgateway (110) ist und die Funktionalität eine Funktionalität eines Masterknotens ist, der das Weglenkungsteilnetz koordiniert.

9. Verfahren nach Anspruch 8, außerdem umfassend eine Aktivierung ergänzender Funktionalitäten im Knoten (121), der als der nächstgelegene zum Internet-Zugangsgateway (110) identifiziert wurde, wobei die ergänzenden Funktionalitäten Firewall-Funktionalitäten gegenüber den Datenflüssen, die über das Internet durch das Internet-Zugangsgateway (110) ausgetauscht werden, und/oder Funktionalitäten der elterlichen Kontrolle gegenüber den Datenflüssen sind, die über das Internet durch das Internet-Zugangsgateway (110) ausgetauscht werden.

10. Erweiterungssystem zur Abdeckung drahtloser Kommunikation, umfassend ein Weglenkungsteilnetz in Baumform, umfassend eine Gruppe miteinander verbundener Knoten (121, 122, 123, 124), wobei eine Vielzahl von Knoten (121, 122, 123, 124) des Weglenkungsteilnetzes eine Funktionalität eines Zugangspunktes eines gemeinsamen drahtlosen Kommunikationsnetzes implementieren, wobei das Erweiterungssystem zur Abdeckung drahtloser Kommunikation dazu geeignet ist, eine Verbindung von Vorrichtungen (110, 141, 142, 143, 144), die die Zielvorrichtung (110, 142) umfassen, mit den Knoten (121, 122, 123, 124) über das drahtlose Kommunikationsnetz oder drahtgebunden zu ermöglichen, um ein lokales Netz zu bilden, wobei das System umfasst:
- Mittel zum Überwachen (301) der ausgetauschten Nachrichten in einer Phase der Adressenauflösung und daraus Erhalten einer Zuordnung zwischen Netzadresse und Medium Access Control(MAC)-Adresse jeder Vorrichtung (110, 141, 142, 143, 144), die mit dem lokalen Netz und Knoten (121, 122, 123, 124) des Weglenkungsteilnetzes verbunden ist;
- Mittel zum Ausfüllen (303) einer Adressenauflösungstabelle in jedem Knoten (121, 122, 123, 124), indem darin jede Zuordnung zwischen Netzadresse und MAC-Adresse, die vom Knoten (121, 122, 123, 124) erhalten wurde, sowie eine Schnittstelleninformation angegeben wird, die eine Schnittstelle des Knotens (121, 122, 123, 124) darstellt, über die die Nachricht, die den Erhalt der Zuordnung ermöglicht hat, empfangen wurde;
und zum Identifizieren eines nächstgelegenen Knotens (121, 122) zu der Zielvorrichtung (110, 142) unter den Knoten (121, 122, 123, 124) des Weglenkungsteilnetzes umfasst das System Mittel zum Analysieren der Auflösungstabellen, aufweisend:
- Mittel zum Durchsuchen (402) der Adressenauflösungstabellen, indem nach der Zuordnung zwischen Netzadresse und MAC-Adresse, die der Zielvorrichtung (110, 142) entspricht, gesucht wird und daraus Erhalten der zugeordneten Schnittstelleninformation; und
- Mittel zum Identifizieren (504) des nächstgelegenen Knotens (121, 122) zu der Zielvorrichtung (110, 142) als den Knoten, dessen Adressenauflösungstabelle keinen Knoten des Weglenkungsteilnetzes in Zuordnung zu der Schnittstelleninformation referenziert.

11. System nach Anspruch 10, außerdem umfassend Mittel zum Aktivieren einer Funktionalität spezifisch in dem Knoten, der als der nächstgelegene zu der Zielvorrichtung identifiziert wurde.

12. System nach Anspruch 11, wobei die Zielvorrichtung ein Internet-Zugangsgateway ist und die Funktionalität eine Funktionalität eines Masterknotens ist, der das Weglenkungsteilnetz koordiniert.

13. System nach Anspruch 12, außerdem umfassend Mittel zur Aktivierung ergänzender Funktionalitäten spezifisch im Knoten, der als der nächstgelegene zum Internet-Zugangsgateway identifiziert wurde, wobei die ergänzenden Funktionalitäten Firewall-Funktionalitäten gegenüber den Datenflüssen, die über das Internet durch das Internet-Zugangsgateway ausgetauscht werden, und/oder Funktionalitäten der elterlichen Kontrolle gegenüber den Datenflüssen sind, über das Internet durch das Internet-Zugangsgateway ausgetauscht werden.

14. Knoten, betrachteter Knoten genannt, der dazu bestimmt ist, in einem Erweiterungssystem zur Abdeckung drahtloser Kommunikation genutzt zu werden, umfassend ein Weglenkungsteilnetz in Baumform, umfassend eine Gruppe miteinander verbundener Knoten (121, 122, 123, 124), darunter der betrachtete Knoten, wobei eine Vielzahl von Knoten (121, 122, 123, 124) des Weglenkungsteilnetzes eine Funktionalität eines Zugangspunktes eines gemeinsamen drahtlosen Kommunikationsnetzes implementiert, wobei das Erweiterungssystem zur Abdeckung drahtloser Kommunikation dazu geeignet ist, eine Verbindung der Vorrichtungen (110, 141, 142, 143, 144), die die Zielvorrichtung (110, 142) umfassen, mit den Knoten (121, 122, 123, 124) über das drahtlose Kommunikationsnetz oder drahtgebunden zu ermöglichen, um ein lokales Netz zu bilden, wobei der betrachtete Knoten umfasst:
- Mittel zum Überwachen (301) der ausgetauschten Nachrichten in einer Phase der Adressenauflösung und daraus Erhalten einer Zuordnung zwischen Netzadresse und Medium Access Control(MAC)-Adresse jeder Vorrichtung (110, 141, 142, 143, 144), die mit dem lokalen Netz und Knoten (121, 122, 123, 124) des Weglenkungsteilnetzes verbunden ist;
- Mittel zum Ausfüllen (303) einer Adressenauflösungstabelle, indem darin jede Zuordnung zwischen Netzadresse und MAC-Adresse, die vom betrachteten Knoten erhalten wurde, sowie eine Schnittstelleninformation angegeben wird, die eine Schnittstelle des betrachteten Knotens darstellt, über die die Nachricht, die den Erhalt der Zuordnung ermöglicht hat, empfangen wurde;
und zum Identifizieren, ob der betrachtete Knoten unter den Knoten (121, 122, 123, 124) des Weglenkungsteilnetzes der nächstgelegene zu der Zielvorrichtung (110, 142) ist, umfasst der betrachtete Knoten Mittel zum Analysieren seiner Auflösungstabelle, aufweisend:
- Mittel zum Durchsuchen (402) der Adressenauflösungstabelle, indem nach der Zuordnung zwischen Netzadresse und MAC-Adresse, die der Zielvorrichtung (110, 142) entspricht, gesucht wird und daraus Erhalten der zugeordneten Schnittstelleninformation; und
- Mittel zum Identifizieren des betrachteten Knotens als den nächstgelegenen zu der Zielvorrichtung (110, 142), wenn die Adressenauflösungstabelle keinen Knoten des Weglenkungsteilnetzes in Zuordnung zu der Schnittstelleninformation referenziert, und zum Identifizieren des betrachteten Knotens als den nicht nächstgelegenen zu der Zielvorrichtung (110, 142), falls dies nicht gegeben ist; und
- Mittel zum Informieren über das Weglenkungsteilnetz, dass der betrachtete Knoten unter den Knoten (121, 122, 123, 124) des Weglenkungsteilnetzes der nächstgelegene zu der Zielvorrichtung (110, 142) ist oder nicht.

## Claims

1. Method for identifying a node (121, 122) closest to a target device (110, 142) in a wireless communication coverage extension system comprising a backhaul subnetwork in the shape of a tree comprising a set of interconnected nodes (121, 122, 123, 124), a plurality of nodes (121, 122, 123, 124) of the backhaul subnetwork implementing a functionality of an access point of one and the same wireless communication network, the wireless communication coverage extension system being suitable for allowing devices (110, 141, 142, 143, 144) including said target device (110, 142) to be connected to said nodes (121, 122, 123, 124) via the wireless communication network or by wire in order to form a local area network, the method comprising the following steps:
- monitoring (301) messages exchanged during an address resolution phase, and obtaining therefrom an association between network address and Medium Access Control (MAC) address of each device (110, 141, 142, 143, 144) connected to the local area network and node (121, 122, 123, 124) of the backhaul subnetwork;
- filling in (303), in each said node (121, 122, 123, 124), an address resolution table, indicating therein each association between network address and MAC address obtained by said node (121, 122, 123, 124), and also interface wqinformation representing an interface of said node (121, 122, 123, 124) via which the message which allowed said association to be obtained was received;
and, to identify the node (121, 122) closest to the target device (110, 142) among said nodes (121, 122, 123, 124) of the backhaul subnetwork, the method comprises an analysis of the resolution tables which includes the following steps:
- scanning (402) the address resolution tables in search of the association between network address and MAC address corresponding to said target device (110, 142), and obtaining therefrom the associated interface information; and
- identifying the node (121, 122) closest to the target device (110, 142) as being the node the address resolution table of which does not reference any node of the backhaul subnetwork in association with said interface information.

2. Method according to Claim 1, wherein each node (121, 122, 123, 124) of the backhaul subnetwork scans its own resolution table so as to ascertain whether the target device is referenced therein and, according to the identification of the node (121, 142) closest to the target device (110, 142), transmits a message indicating whether said node in question (121, 122, 123, 124) is closest to the target device (110, 142) among the nodes (121, 122, 123, 124) of the backhaul subnetwork, the closest node being the node the resolution table of which does not comprise any node referenced in association with the interface information representing the interface of said node (121, 122, 123, 124) via which the message which allowed said association to be obtained was received.

3. Method according to Claim 1, wherein each node (121, 122, 123, 124) of the backhaul subnetwork scans its own resolution table and transmits a message which includes an analysis score representative of the topological distance, within the backhaul subnetwork, which separates it from the target device (110, 142).

4. Method according to any one of Claims 1 to 3, wherein each node (121, 122, 123, 124) of the backhaul subnetwork performs the analysis for one or more predetermined target devices (110, 142) each time a change is made to its address resolution table.

5. Method according to any one of Claims 1 to 4, wherein the analysis of the address resolution tables is performed while excluding the entries in the address resolution tables which correspond to interfaces over which it is predetermined that the target device (110, 142) is not connected.

6. Method according to any one of Claims 1 to 5, wherein the target device is an Internet access gateway (110), which was identified by virtue of a dedicated field of a lease provided to a node (121, 122, 123, 124) of the backhaul subnetwork by a Dynamic Host Configuration Protocol (DHCP) server.

7. Method for activating functionality in a wireless communication coverage extension system comprising a backhaul subnetwork in the shape of a tree comprising a set of interconnected nodes (121, 122, 123, 124), the method including identifying a node (121, 122) closest to a target device (110, 142) among said nodes of the backhaul subnetwork according to one of Claims 1 to 6 and furthermore activating (603, 703) said functionality specifically in the node identified as being closest to the target device.

8. Method according to Claim 7, wherein the target device is an Internet access gateway (110) and the functionality is a functionality of a master node coordinating the backhaul subnetwork.

9. Method according to Claim 8, further comprising activating additional functionalities in the node (121) identified as being closest to the Internet access gateway (110), the additional functionalities being functionalities of a firewall in relation to data streams exchanged via the Internet through the Internet access gateway (110) and/or functionalities of parental control in relation to data streams exchanged via the Internet through the Internet access gateway (110).

10. Wireless communication coverage extension system comprising a backhaul subnetwork in the shape of a tree comprising a set of interconnected nodes (121, 122, 123, 124), a plurality of nodes (121, 122, 123, 124) of the backhaul subnetwork implementing a functionality of an access point of one and the same wireless communication network, the wireless communication coverage extension system being suitable for allowing devices (110, 141, 142, 143, 144) including a target device (110, 142) to be connected to said nodes (121, 122, 123, 124) via the wireless communication network or by wire in order to form a local area network, the system comprising:
- means for monitoring (301) messages exchanged during an address resolution phase, and obtaining therefrom an association between network address and Medium Access Control (MAC) address of each device (110, 141, 142, 143, 144) connected to the local area network and node (121, 122, 123, 124) of the backhaul subnetwork;
- means for filling in (303), in each said node (121, 122, 123, 124), an address resolution table, indicating therein each association between network address and MAC address obtained by said node (121, 122, 123, 124), and also interface information representing an interface of said node (121, 122, 123, 124) via which the message which allowed said association to be obtained was received;
and, to identify a node (121, 122) closest to the target device (110, 142) among said nodes (121, 122, 123, 124) of the backhaul subnetwork, the system comprises means for analysing the resolution tables which include:
- means for scanning (402) the address resolution tables in search of the association between network address and MAC address corresponding to said target device (110, 142), and obtaining therefrom the associated interface information; and
- means for identifying (504) the node (121, 122) closest to the target device (110, 142) as being the node the address resolution table of which does not reference any node of the backhaul subnetwork in association with said interface information.

11. System according to Claim 10, further comprising means for activating a functionality specifically in the node identified as being closest to the target device.

12. System according to Claim 11, wherein the target device is an Internet access gateway and the functionality is a functionality of a master mode coordinating the backhaul subnetwork.

13. System according to Claim 12, further comprising means for activating additional functionalities specifically in the node identified as being closest to the Internet access gateway, the additional functionalities being functionalities of a firewall in relation to data streams exchanged via the Internet through the Internet access gateway and/or functionalities of parental control in relation to data streams exchanged via the Internet through the Internet access gateway.

14. Node, called the node under consideration, intended to be used in a wireless communication coverage extension system comprising a backhaul subnetwork in the shape of a tree comprising a set of interconnected nodes (121, 122, 123, 124) including the node under consideration, a plurality of nodes (121, 122, 123, 124) of the backhaul subnetwork implementing a functionality of an access point of one and the same wireless communication network, the wireless communication coverage extension system being suitable for allowing devices (110, 141, 142, 143, 144) including a target device (110, 142) to be connected to said nodes (121, 122, 123, 124) via the wireless communication network or by wire in order to form a local area network, the node under consideration comprising:
- means for monitoring (301) messages exchanged during an address resolution phase, and obtaining therefrom an association between network address and Medium Access Control (MAC) address of each device (110, 141, 142, 143, 144) connected to the local area network and node (121, 122, 123, 124) of the backhaul subnetwork;
- means for filling in (303) an address resolution table, indicating therein each association between network address and MAC address obtained by the node under consideration, and also interface information representing an interface of the node under consideration via which the message which allowed said association to be obtained was received;
and, to identify whether the node under consideration is closest to the target device (110, 142) among said nodes (121, 122, 123, 124) of the backhaul subnetwork, the node under consideration comprises means for analysing its resolution table which include:
- means for scanning (402) the address resolution table in search of the association between network address and MAC address corresponding to said target device (110, 142), and obtaining therefrom the associated interface information; and
- means for identifying the node under consideration as being closest to the target device (110, 142) when the address resolution table does not reference any node of the backhaul subnetwork in association with said interface information, and for identifying the node under consideration as not being closest to the target device (110, 142) otherwise; and
- means for making it known, via the backhaul subnetwork, that the node under consideration is or is not the node closest to the target device (110, 142) among said nodes (121, 122, 123, 124) of the backhaul subnetwork.
